# EUROPÄISCHE PATENTSCHRIFT

(11) **EP 1 386 833 B1**
(45) Veröffentlichungstag und Bekanntmachung des Hinweises auf die Patenterteilung: **04.04.2007**
(21) Anmeldenummer: 03009303.3
(22) Anmeldetag: 24.04.2003
(51) Int. Cl.: B62J 15/02

(54) **Vorrichtung zur Befestigung eines Radschützers an Radialstreben eines Fahrrades**
Device for fixing a mud-guard to radial struts for a bicycle
Dispositif de fixation d'un garde-boue à bras rayonnants pour une bicyclette

(30) Priorität: 03.08.2002 DE 10235674
(43) Veröffentlichungstag der Anmeldung: 04.02.2004
(73) Patentinhaber: REB Reinhard Elbracht GmbH, 33607 Bielefeld (DE)
(72) Erfinder: Elbracht, Horst, 33607 Bielefeld (DE); Elbracht, André, 33719 Bielefeld (DE)
(74) Vertreter: Elbertzhagen, Otto

(56) Entgegenhaltungen:
- EP-A- 0 967 141
- DE-T2- 69 600 428
- DE-U1- 20 220 380
- GB-A- 2 278 323
- GB-A- 2 383 314

## Beschreibung

Die Erfindung betrifft eine Vorrichtung nach dem Oberbegriff des Patentanspruchs 1.

Bei einer Vorrichtung der als bekannt vorausgesetzten Art (GB 22 78 323 A) weist ein Halter zur Verbindung eines Radschützers mit einer Radialstrebe eine Rille auf, in die der Randbereich des Radschützers eingesteckt ist. Oberhalb der Rille ragt ein Zapfen aus dem Halter hervor, der in eine Bohrung des Radschützers hineinragt. Die Befestigung des Halters an den Radialstreben erfolgt mittels Klemm- oder Zugschrauben. Die Befestigung des Radschützers kann sich durch starke Erschütterungen oder bei leichtem Verbiegen der Radialstreben lösen.

Eine weitere bekannte Vorrichtung (DE 696 00 428 T2) weist zur Befestigung des Radschützers an zwei parallel zueinander verlaufenden Radialstreben einen Halter aus elastischem Kunststoff auf. Der Halter besitzt an seiner Oberseite einen Aufnahmeschlitz, in den der Randbereich des Radschützers eingeschoben wird. Zwei Bohrungen nehmen die Radialstreben auf. Quer zu den Bohrungen und quer zum Schlitz verlaufend ist eine Klemmschraube in den Halter eingeschraubt, die eine Durchtrittsöffnung des Radschützers durchsetzt. Die selbstschneidend ausgebildete Klemmschraube fixiert sowohl die Radialstreben in den parallelen Bohrungen des Halters als auch den Radschützer am Halter. Wenn die Durchtrittsöffnung des Radschützers nicht exakt dem Außendurchmesser der Klemmschraube entspricht, ist die Verbindung zwischen Halter und Radschützer nicht einwandfrei formschlüssig, sondern im wesentlichen kraftschlüssig. Diese Verbindung neigt dann zum Klappern und zur Instabilität.

Ausgehend von dem eingangs genannten Stand der Technik liegt der Erfindung die Aufgabe zugrunde, eine Vorrichtung der als bekannt vorausgesetzten Art so auszubilden, daß sie eine stabile klapperfreie Verbindung zwischen der Radialstrebe und dem Radschützer schafft, die auch leicht montierbar ist.

Die Lösung dieser Aufgabe erfolgt mit den Merkmalen des Patentanspruchs 1.

Die Montage und Demontage des Halters ist einfach. Es wird eine stabile und relativ steife Verbindung zwischen Radschützer und Radialstrebe geschaffen, die klapperfrei ist.

Bevorzugte Ausgestaltungen der Erfindung ergeben sich aus den Unteransprüchen.

Der abgebogene oder abgewinkelte Zapfen läßt sich leicht montieren. Hierzu wird der Zapfen des Halters, der schon an der Radialstrebe angeschraubt ist, in die Durchgangsöffnung eingeschoben und der Halter so verschwenkt, daß der Zapfen unter Vorspannung an der Innenseite des Radschützers anliegt. Dabei liegt der Rand des Radschützers im Aufnahmeschlitz.

Nachstehend wird eine bevorzugte Ausführungsform der Erfindung anhand der Zeichnungen im einzelnen beschrieben. Es zeigen:
- Figur 1 -: eine perspektivische Ansicht einer Vorrichtung zur Befestigung eines Radschützers mit einer Radialstrebe;
- Figur 2 -: einen vergrößerten Ausschnitt der Vorrichtung gemäß Fig. 1;
- Figur 2a: -eine vergrößerte Längsschnittdarstellung eines Teilbereichs von Figur 2;

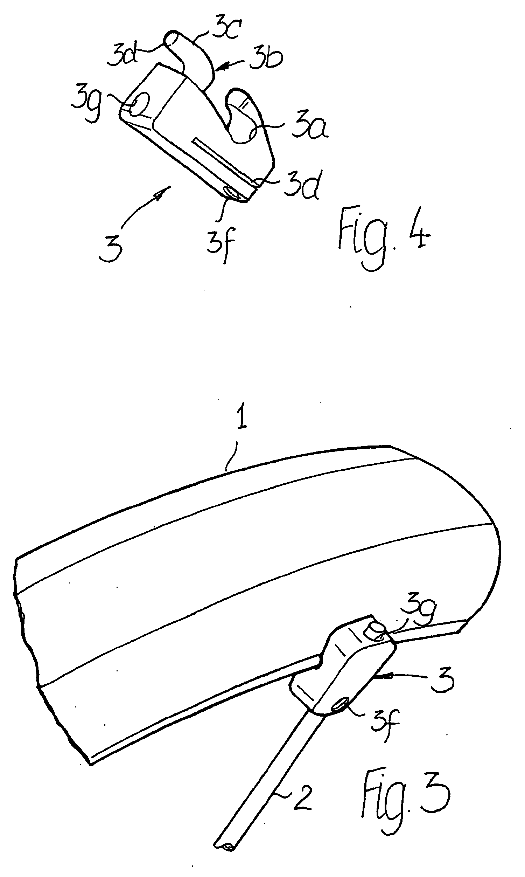

- Figur 3 -: eine perspektivische Darstellung der Vorrichtung gemäß Fig. 1 mit Blickrichtung von oben;
- Figur 4 -: eine perspektivische Darstellung des Halters der Vorrichtung gemäß Fig. 3.

Die Vorrichtung zur Befestigung eines Radschützers 1 an einer Radialstrebe 2 eines Fahrrades weist einen klobenförmigen Halter 3 auf, der mit einer Rille 3a den Rand 1b des Radschützers 1 hintergreift. Quer zur Rille 3a und mit Abstand zu dieser verläuft in dem Halter 3 eine die Radialstrebe 2 aufnehmende Bohrung 3g. In dem Halter 3 ist ein Klemmschlitz 3d vorgesehen, der ausgehend von der Bohrung 3g nach außen verläuft. Der Klemmschlitz 3d wird von einer Klemmschraube 3f durchsetzt, die den Halter 3 auf der Radialstrebe 2 festsetzt. Die Klemmschraube 3f kann selbstschneidend sein.

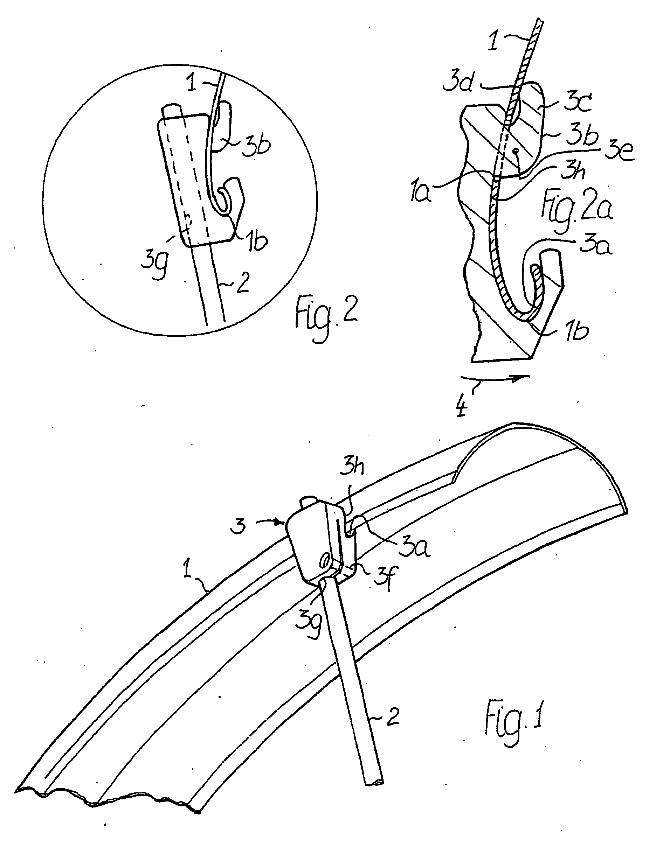

Wie dies insbesondere aus Fig. 2 ersichtlich ist, ist eine an die Rille 3a nach oben anschließende Fläche 3h des Halters 3 so geformt, daß der Halter 3 sich im montierten Zustand dicht an das Außenprofil des Radschützers 1 anschmiegt. Aus dieser Fläche 3h springt ein abgebogener oder abgewinkelter Zapfen 3b vor, der eine Durchgangsöffnung 1a des Radialschützers 1 durchsetzt.

Der gekrümmte Zapfen 3b weist benachbart zur Fläche 3h einen kreiszylindrischen Bereich (3e) auf, dessen Durchmesser demjenigen der Durchgangsöffnung 1a entspricht bzw. geringfügig kleiner ist. An den kreiszylindrischen und sich senkrecht durch die Durchgangsöffnung 1a erstreckenden kreiszylindrischen Bereich schließt sich ein abgewinkelter oder abgebogener Bereich 3c an. Dieser abgewinkelte oder abgebogene Bereich 3c liegt mit einer Anlagefläche 3d unter Vorspannung an der Innenseite des Radschützers 1 an. Der Rand 1b des Radschützers wird beim Einführen des Zapfens 3b fest gegen den Grund der Rille 3a gedrückt. Es entsteht eine besonders feste und verbindungssteife Klemmverbindung zwischen dem Halter 3 und dem Radschützer 1, die völlig klapperfrei ist.

Wenn aufgrund äußerer Einwirkung sich der Halter 3 von dem Radschützer löst, kann dann, wenn der Halter nicht beschädigt wurde, leicht und einfach eine Neumontage erfolgen.

## Patentansprüche

1. Vorrichtung zur Befestigung eines Radschützers (1) an einer Radialstrebe (2) eines Fahrrades, mit einem an der Radialstrebe (2) befestigten Halter (3) aus Kunststoff, der eine Rille (3a) zur Aufnahme des Randbereichs des Radschützers (1) und auf der dem Radschützer (1) zugewandten Seite einen Zapfen (3b) aufweist, der in eine im Radschützer (1) vorgesehene Durchgangsöffnung (1a) eingreift,
**dadurch gekennzeichnet,**
**daß** der Zapfen (3b) im Anschluß an einen die Durchgangsöffnung (1a) durchsetzenden Bereich (3e) einen davon abgewinkelten oder abgebogenen Bereich (3c) aufweist, der mit einer Anlagefläche (3d) zur Anlage an der Innenfläche des Radschützers (1) ausgebildet ist.

2. Vorrichtung nach Anspruch 1,
**dadurch gekennzeichnet,**
**daß** die Anlagefläche (3d) zur unter Vorspannung erfolgenden Anlage ausgebildet ist.

3. Vorrichtung nach Anspruch 1 oder 2,
**dadurch gekennzeichnet,**
**daß** der Zapfen (3b) einen in Richtung auf sein freies Ende sich verringernden Durchmesser aufweist.

4. Vorrichtung nach mindestens einem der Ansprüche 1 bis 3,
**dadurch gekennzeichnet,**
**daß** die Längsmittelebene des Zapfens (3b) durch die Längsachse der Radialstrebe (2) oder dazu parallel verläuft.

5. Vorrichtung nach mindestens einem der Ansprüche 1 bis 4,
**dadurch gekennzeichnet,**
**daß** der abgebogene oder abgewinkelte Bereich (3c) sich aufwärts erstreckt.

## Claims

1. Device for fixing a mud-guard (1) to a radial strut (2) of a bicycle, comprising a plastic holder (3) fixed to the radial strut (2) which comprises a groove (3a) for receiving the edge region of the mud-guard (1) and a lug (3b) on the side facing the mud-guard (1) which engages in a through opening (1a) provided in the mud-guard (1),
**characterised in that**
the lug (3b) comprises, connecting to a region (3e) going through the through opening (1a), a region (3c) which is angled away or bent away from it which is formed with an abutment surface (3d) for abutment against the inner surface of the mud-guard (1).

2. Device according to claim 1,
**characterised in that**
the abutment surface (3d) is formed for the abutment taking place with pre-tensioning.

3. Device according to claim 1 or 2,
**characterised in that**
the lug (3b) has a decreasing diameter towards its free end.

4. Device according to at least one of the claims 1 to 3,
**characterised in that**
the longitudinal middle plane of the lug (3b) runs through the longitudinal axis of the radial strut (2) or parallel thereto.

5. Device according to at least one of the claims 1 to 4,
**characterised in that**
the bent away or angled away region (3c) extends upwards.

## Revendications

1. Dispositif pour la fixation d'un garde-boue (1) à un bras radial (2) d'une bicyclette, avec un support (3) en matière synthétique fixé au bras radial (2) qui présente une rainure (3a) pour accueillir la zone marginale du garde-boue (1) et, sur le côté orienté vers le garde-boue, une broche (3b) qui s'engage dans un trou de passage (1a) prévu dans le garde-boue (1),
**caractérisé en ce que**
la broche (3b) présente, à la suite d'une zone (3e) passant par le trou de passage (1a), une zone coudée ou arquée (3c) qui est conçue avec une surface d'appui (3d) devant porter contre la face intérieure du garde-boue (1).

2. Dispositif selon la revendication 1,
**caractérisé en ce que**
la surface d'appui (3d) est conçue pour assurer un appui résultant d'une précontrainte.

3. Dispositif selon revendication 1 ou 2,
**caractérisé en ce que**
la broche (3b) présente un diamètre qui diminue en direction de son extrémité libre.

4. Dispositif selon au moins l'une des revendications 1 à 3,
**caractérisé en ce que**
le plan central, longitudinal de la broche (3b) passe par l'axe longitudinal du bras radial (2) ou s'étend parallèlement à celui-ci.

5. Dispositif selon au moins l'une des revendications 1 à 4,
**caractérisé en ce que**
la zone coudée ou arquée (3c) s'étend vers le haut.
